# EUROPÄISCHE PATENTSCHRIFT

(11) **EP 2 883 750 B1**
(45) Veröffentlichungstag und Bekanntmachung des Hinweises auf die Patenterteilung: **13.09.2017**
(21) Anmeldenummer: 14197581.3
(22) Anmeldetag: 12.12.2014
(51) Int. Cl.: B60R 9/06, B60R 9/042

(54) **Lastträger**
Load carrier
Porte-charge

(30) Priorität: 13.12.2013 DE 102013020580
(43) Veröffentlichungstag der Anmeldung: 17.06.2015
(73) Patentinhaber: Genal, Harald, 88284 Wolpertswende (DE)
(72) Erfinder: Genal, Harald, 88284 Wolpertswende (DE)
(74) Vertreter: Otten, Roth, Dobler & Partner mbB Patentanwälte

(56) Entgegenhaltungen:
- EP-B1- 1 818 219
- US-A- 3 215 294
- US-A- 5 505 579
- US-A1- 2009 028 679

## Beschreibung

Die Erfindung betrifft einen Lastträger für ein Fahrzeug wie einen Pkw, ein Wohnmobil, einen Wohnwagen oder dergleichen, wobei wenigstens eine Lasthalterung zur lösbaren Fixierung wenigstens einer Last wie ein Fahrrad, E-Bike, Pedelec, Motorroller, Skikoffer etc. vorgesehen ist, nach dem Oberbegriff des Anspruchs 1.

### Stand der Technik

Bislang sind unterschiedlichste Lastträger, insbesondere Fahrradträger, für Fahrzeuge im Handel erhältlich. Hierbei wird gewöhnlich die Last bzw. das Fahrrad auf dem Dach oder an der Heckwand des Fahrzeugs, insbesondere bei Wohnmobilen, Wohnwägen oder Bussen etc., angebracht und dort fixiert. Üblicherweise geschieht dies mit Muskelkraft der entsprechenden Personen, was jedoch bei vergleichsweise kleinen und/oder älteren Personen und/oder etwas körperlich beeinträchtigten Personen durchaus erhebliche Mühe bereiten kann.

In der US 3,215,294 wird eine Lasthalterung für ein Fahrzeug bzw. Pkw offenbart, wobei mittels eines schwenkbaren Auslegerkrans ein Boot auf das Dach des Fahrzeugs angehoben werden kann. Der Lastträger bzw. Kran weist hierfür unter anderem ein Seil auf, an das das Boot angehoben werden kann. Dieser Lastträger aus dem Jahr 1965 mit einem Kran ist jedoch nur bedingt im heutigen Straßenverkehr und im Rahmen der heutigen gesetzlichen Vorschriften einsetzbar.

Heckträger für Reisemobile oder Wohnwagen oder dergleichen müssen jedoch am Fahrzeug vergleichsweise weit oben montiert werden, um gemäß Verkehrsvorschriften bzw.

Sicherheitsvorschriften die Sichtbarkeit der Beleuchtung bzw. Rücklichter zu gewährleisten. Dementsprechend aufwändig ist die Fixierung der Last bzw. des Fahrrads am Lastträger.

So gibt es bereits Lastträger bzw. Fahrradträger als Liftsysteme, die beispielsweise an der Heckwand eines Wohnmobils oder Wohnwagens fixiert werden. Mit Hilfe derartiger Liftsysteme werden die Fahrräder bzw. die Lasten in einem abgesenkten Zustand am Liftsystem montiert und anschließend mit dem Liftsystem angehoben.

So ist bereits am Markt von der Firma Fiama ein so genannter "Carry Bike Lift" erhältlich, womit am Heck eines Wohnmobils bzw. Wohnwagens Fahrräder in einer abgesenkten Montageposition fixiert und dann nach oben geschwenkt werden können, so dass in der Transportphase bzw. während dem Fahren mit dem Wohnmobil/Fahrzeug die Fahrräder in einer erhöhten Position fixiert sind.

Nachteilig hierbei ist jedoch, dass die bislang im Handel erhältlichen Liftsysteme vergleichsweise aufwändig und kostenintensiv sind.

### Aufgabe und Vorteile der Erfindung

Aufgabe der Erfindung ist es demgegenüber, einen Lastträger vorzuschlagen, der mit geringem Aufwand und somit insbesondere auch kostengünstig realisiert werden kann.

Diese Aufgabe wird, ausgehend von einem Lastträger der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Lastträger dadurch aus, dass auf der der Fahrzeugseite gegenüberliegenden Lastseite die Hebeeinheit Befestigungsmittel zum lösbaren Befestigen der Lasthalterung umfasst, wobei die Lasthalterung Befestigungsmittel zur lösbaren Befestigung an der Hebeeinheit aufweist, und dass die lastseitigen Befestigungsmittel der Hebeeinheit wenigstens ein erstes Last-Befestigungselement und von dem ersten Last-Befestigungselement in einem ersten Abstand angeordnetes, zweites Last-Befestigungselement aufweisen, wobei das erste Last-Befestigungselement mit einem ersten Befestigungselement der Lasthalterung und das zweite Last-Befestigungselement mit einem zweiten Befestigungselement der Lasthalterung in Wirkverbindung bringbar sind.

Hiermit wird eine Hebeeinheit bzw. ein Lift verwirklicht, die/der als Adapter zwischen Fahrzeug und Lasthalterung bzw. Fahrradträger ausbildbar ist. Eine derartige "Adapterfunktion" der erfindungsgemäßen Hebeeinheit ist sehr flexibel an unterschiedlichste Fahrzeuge und/oder Lasthalterungen bzw. Fahrradträger, Skiboxen, Surfboardhalter, Skiträger oder dergleichen anpassbar.

So kann beispielsweise ein und dieselbe Hebeeinheit gemäß der Erfindung für unterschiedlich ausgebildete Lasthalterungen verwendet werden. Durch Montage bzw. Fixierung unterschiedlicher Lasthalterungen an der erfindungsgemäßen Hebeeinheit kann einerseits ein Fahrradträger oder ein Surfboardträger oder eine Skibox oder ein Kajakhalter etc. am Fahrzeug befestigt und mit diesem in vorteilhafter Weise transportiert werden. Hierbei können auch entsprechend schwere Lasten wie z.B. E-Bikes, Pedelecs, Motorroller oder dergleichen in einer abgesenkten Position der Hebeeinheit an der Lasthalterung fixiert und mit Hilfe der Hebeeinheit bzw. dem Lift gemäß der Erfindung in eine angehobene Position verstellt werden. In der angehobenen Position der Hebeeinheit bzw. des Lifts kann in vorteilhafter Weise wenigstens eine Arretiereinheit, Rasteinheit oder dergleichen vorgesehen werden, um eine unbeabsichtigte Absenkung/Verstellung der Lasthalterung während der Fahrt des Fahrzeugs wirkungsvoll zu verhindern.

Darüber hinaus kann gemäß der Erfindung auch eine Anpassung der Befestigungsmittel auf der Fahrzeugseite in Abhängigkeit des jeweiligen Fahrzeugs bzw. des jeweiligen Fahrzeugtyps vorgesehen werden. Beispielsweise kann eine Anpassung der fahrzeugseitigen Befestigungsmittel der Hebeeinheit an ein Wohnmobil oder einen Wohnwagen oder einen Pkw/Pkw-Typ vorgesehen werden. So kann z.B. durch Anpassung der fahrzeugseitigen Befestigungsmittel im Wesentlichen dieselbe Hebeeinheit für unterschiedlichste Fahrzeuge verwendet werden.

Durch diese Maßnahmen kann beispielsweise ein und dieselbe Hebeeinheit, ggf. mit unterschiedlichen Befestigungsmitteln, für unterschiedlichste Fahrzeuge bzw. Fahrzeugkonstruktionen und auch für unterschiedlichste Lasthalterungen bzw. Lasten verwendet werden. Dies ermöglicht einerseits eine besonders große Flexibilität des Lastträgers gemäß der Erfindung sowie andererseits eine vergleichsweise hohe Stückzahl der Hebeeinheit und somit eine wirtschaftlich günstige Herstellungsmöglichkeit einer Hebeeinheit und/oder eines Lastträgers gemäß der Erfindung.

Vorteilhafterweise sind die Befestigungsmittel der Lasterhalterung gleich ausgebildet wie die fahrzeugseitigen Befestigungsmittel der Hebeeinheit. Vielfach weisen die Fahrzeuge meist standardisierte Befestigungsmittel für handelsübliche Lastträger auf, wobei die Lastträger entsprechende Befestigungsmittel zur Befestigung an den Befestigungsmitteln des Fahrzeugs aufweisen. Mit der vorgenannten Maßnahme kann in vorteilhafter Weise eine Lasthalterung mit entsprechend standardisierten Befestigungsmitteln an der Hebeeinheit und diese wiederum in vorteilhafter Weise mittels standardisierten bzw. gleich ausgebildeten Befestigungsmitteln am Fahrzeug befestigt werden.

Gemäß dieser bevorzugten Ausführungsform der Erfindung kann eine vorteilhafte Standardisierung der bzw. aller Befestigungsmittel des Lastträgers gemäß der Erfindung realisiert werden, so dass in vorteilhafter Weise handelsübliche Lasthalterungen bzw. Fahrradträger oder dergleichen an der Hebeeinheit bzw. für den Lastträger gemäß der Erfindung verwendbar sind.

So können beispielsweise bereits vorhandene Lasterhaltungen bzw. Fahrradträger von entsprechenden Personen in vorteilhafter Weise an bzw. für den Lastträger gemäß der Erfindung verwendet werden. Das bedeutet, dass beispielsweise Personen, die ein Fahrzeug wie ein Wohnmobil etc. besitzen und hierbei bereits einen handelsüblichen Lastträger bzw. Fahrradträger verwendeten, gemäß dieser Ausführungsform der Erfindung eine vorteilhafte Hebeeinheit zur Nachrüstung der vorhandenen Komponenten, d.h. Lasthalterung und Fahrzeug, verwenden kann. Durch diese Nachrüstfunktion bzw. Adapterfunktion der Hebeeinheit wird ein besonders kostengünstiges Liftsystem für Lasten bzw. Fahrräder, Pedelecs etc. realisierbar.

Bei den bislang handelsüblichen Liftsystemen konnten die ggf. vorhandenen Lasthalterungen, wie Fahrradträger für das Wohnmobil, nicht weiter verwendet werden, so dass ein erheblicher finanzieller Verlust hiermit verbunden war. Gemäß der Erfindung ist dies in vorteilhafterweise wirkungsvoll verhindert, da die vorhandenen, insb. handelsüblichen Lasthalterungen bzw. Fahrradträger oder dergleichen weiterverwendet werden können und möglichst auch sollen.

Vorzugsweise weisen die lastseitigen Befestigungsmittel der Hebeeinheit wenigstens ein erstes Lastbefestigungselement und von dem ersten Lastbefestigungselement in einem ersten Abstand angeordnetes, zweites Lastbefestigungselement auf, wobei das erste Lastbefestigungselement mit einem ersten Befestigungselement der Lasthalterung und das zweite Lastbefestigungselement mit einem zweiten Befestigungselement der Lasthalterung in Wirkverbindung bringbar sind.

Vorteilhafterweise weisen die fahrzeugseitigen Befestigungsmittel der Hebeeinheit wenigstens ein erstes Fahrzeugbefestigungselement und von dem ersten Fahrzeugbefestigungselement in einem zweiten Abstand angeordnetes, zweites Fahrzeugbefestigungselement auf, wobei das erste Fahrzeugbefestigungselement mit einem ersten Befestigungselement einer Befestigungseinheit des Fahrzeugs und das zweite Fahrzeugbefestigungselement mit einem zweiten Befestigungselement der Befestigungseinheit des Fahrzeugs in Wirkverbindung bringbar sind.

Mit Hilfe der bzw. einer der vorgenannten Maßnahmen ist eine konstruktiv vorteilhafte bzw. stabile Befestigung der Hebeeinheit am Fahrzeug und auch an der Lasthalterung realisierbar. Der vorteilhafte Abstand bzw. die vorteilhaften Abstände ermöglichen eine besonders stabile Befestigung der Lasthalterung an der Hebeeinheit bzw. der Hebeeinheit am Fahrzeug.

In einer besonderen Weiterbildung der Erfindung sind der erste Abstand der Hebeeinheit und der zweite Abstand der Hebeeinheit gleich groß. Hiermit ist die Hebeeinheit kompatibel mit dem Fahrzeug und mit der standardisierten Lasthalterung, so dass in vorteilhafter Weise ein standardisiertes Befestigungssystem der Hebeeinheit verwirklicht wird. Mit diesem vorteilhaften standardisierten Befestigungssystem können mit Hilfe der als Adaptereinheit ausgebildeten Hebeeinheit in vorteilhafter Weise auch entsprechend standardisierte, handelsübliche Lasthalterungen wie Fahrradträger oder dergleichen verwendet werden.

Die beispielsweise in vertikaler Richtung oben angeordneten Befestigungselemente des Fahrzeugs und der Hebeeinheit bzw. der Lasthalterung, die jeweils miteinander in Wirkverbindung zu bringen sind, sind kraft- und/oder formschlüssig zur festen Fixierung bzw. zum Einhaken ausgebildet. Die entsprechenden beiden, in vertikaler Richtung betrachtet unten angeordneten Befestigungselemente des Fahrzeugs bzw. der Hebeeinheit und/oder der Lasthalterung, die ebenfalls jeweils in Wirkverbindung zu bringen sind, können beispielsweise lediglich als Anschlag oder dergleichen ausgebildet werden. Hiermit wird eine konstruktiv vorteilhafte bzw. ohne großen Aufwand realisierbare Befestigung der Hebeeinheit am Fahrzeug und der Lasthalterung an der Hebeeinheit realisierbar.

Bei einem Lastträger, der auf einem Dach eines Fahrzeugs montiert wird, sind in vorteilhafter Weise die jeweiligen Befestigungselemente in horizontaler Richtung voneinander beabstandet. Dies ermöglicht eine stabile und sichere Befestigung am Fahrzeug, auch während der Fahrt.

In einer besonderen Weiterbildung der Erfindung ist die Hebeeinheit als Linearhebeeinheit mit einem Linearantrieb zum geradlinigen Anheben und Absenken der Lasthalterung ausgebildet. Gerade bei einer bevorzugten Ausbildung des Lastträgers als Heckträger für ein Fahrzeug ist dies von besonderem Vorteil, da hiermit eine geradlinige, insbesondere vertikale Anhebung der Lasthalterung realisierbar ist. Dementsprechend wenig Raum hinter dem Fahrzeug wird für die Beladung bzw. für das Abladen der Last, insbesondere der Fahrräder oder dergleichen, benötigt. Dies ist gerade in beengten Verhältnissen, beispielsweise beim Parken in der Stadt und Weiterfahrt mit den Fahrrädern bzw. Pedelecs etc. von großem Vorteil. Auch bei entsprechend beengten Verhältnissen auf Campingplätzen oder dergleichen ist dies von großem Vorteil.

Vorteilhafterweise umfasst die Linearhebeeinheit eine Teleskopiervorrichtung, wobei beispielsweise ein erster Rahmen mit einem zweiten Rahmen teleskopierbar zueinander verstellbar sind. Vorteilhafterweise ist der erste Rahmen am Fahrzeug befestigt und der zweite Rahmen an der Lasthalterung, so dass in vorteilhafter Weise das Anheben bzw. Absenken der Lasthalterung realisiert wird.

Beispielsweise kann als Antrieb ein Elektromotor mit einem flexiblen Zugelement wie ein Seil, Band oder dergleichen verwendet werden. Beispielsweise durch Aufwickeln und Abwickeln des Zugseiles bzw. Zugbandes kann das Anheben bzw. Absenken der Lasthalterung realisiert werden.

Alternativ können auch Antriebssysteme mit Elektromotor und Gewindespindel zur Linearverstellung verwendet werden.

Vorteilhafterweise umfasst die Linearhebeeinheit wenigstens eine Hubkolbenzylindereinheit, insbesondere eine elektrische, pneumatische und/oder hydraulische Hubkolbenzylindereinheit. Hiermit ist eine besonders platzsparende Linearverstellung realisierbar.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Seitenansicht eines erfindungsgemäßen Lastträgers,
- Figur 2: eine schematische Draufsicht einer erfindungsgemäßen Hebeeinheit im eingefahrenen Zustand und
- Figur 3: eine schematische Draufsicht auf die erfindungsgemäße Hebeeinheit gemäß Figur 2 in ausgefahrener bzw. abgesenkter Position.

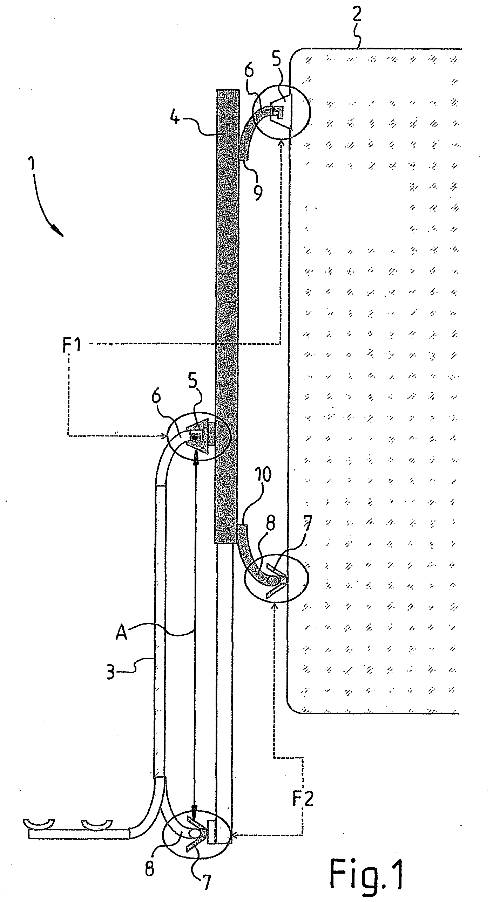

In Figur 1 ist schematisch ein Heckträger 1 für ein Fahrzeug 2 dargestellt. Der Heckträger 1 weist einen Fahrradträger 3 auf, der hier für zwei Fahrräder ausgebildet ist. Beim Fahrradträger 3 handelt es sich um einen handelsüblichen, standardisierten Fahrradträger 3, der beispielsweise bereits vorhanden war und bislang direkt bzw. unmittelbar am Fahrzeug 2 fixiert wurde.

Zur Fixierung des Fahrradträgers 3 ist einerseits eine obere Fixierung F1 und eine untere Fixierung F2 vorgesehen. Mit Hilfe der beiden Fixierungen F1 und F2 wird der Fahrradträger 3 an einer Hebeeinheit 4 bzw. einem Lift 4 befestigt. Die Hebeeinheit 4 umfasst nicht nur die beiden lastseitigen Fixierungen F1 und F2, d.h. die Fixierung für den Fahrradträger 3, sondern auch zwei weitere Fixierungen F1 (oben) und F2 (unten) auf der dem Fahrzeug 2 zugewandten Seite.

Die oberen Fixierungen F1 sind sowohl auf der Lastseite als auch auf der Fahrzeugseite der Hebeeinheit 4 identisch ausgebildet und entsprechend sind auch die beiden Fixierungen F2, einerseits auf der Lastseite und andererseits auf der Fahrzeugseite, identisch ausgebildet. Das bedeutet, dass die Hebeeinheit 4 bzw. der Lift 4 als Adapter 4 ausgebildet und zwischen dem Fahrzeug 2 und dem Fahrradträger 3 bzw. der Lasthalterung 3 dazwischen angeordnet bzw. fixiert werden kann. Dementsprechend kann mit Hilfe der Hebeeinheit 4 ein vorhandenes Lastträgersystem des Fahrzeugs 2 ohne Liftfunktion in vorteilhafter Weise nachgerüstet werden, so dass der bereits vorhandene Fahrradträger 3 bzw. die Lasthalterung 3 am bereits vorhandenen Fahrzeug 2 mit Hilfe der Hebeeinheit 4 angehoben und abgesenkt werden kann. Hiermit kann eine vorteilhafte Montage entsprechender Lasten bzw. Fahrräder, Pedelecs, E-Bikes etc. realisiert werden.

Die obere Fixierung F1 weist jeweils ein Befestigungselement 5 vorzugsweise mit einer Nut und/oder Öse oder dergleichen zur Aufnahme eines zweiten Befestigungselements 6 wie einen Haken oder dergleichen auf. Dementsprechend sind diese beiden, in Wirkverbindung miteinander bringbare Befestigungselemente 5, 6 einerseits auf der Fahrzeugseite der Hebeeinheit 4 und andererseits auf der Lastseite vorhanden bzw. lösbar und zudem fest miteinander fixierbar.

Entsprechend weist auch die Fixierung F2 zwei separate Befestigungselemente 7 und 8 auf, die lösbar und auch fest miteinander fixierbar sind. Im dargestellten Ausführungsbeispiel ist das Befestigungselement 7 als V-förmige Aufnahme/Schiene ausgebildet, um insbesondere als Anschlag 7 ein vorzugsweise als Rohrelement ausgebildetes Befestigungselement 8 entsprechend aufzunehmen bzw. mit diesem in Wirkverbindung zu kommen. Auch hier ist sowohl auf der Seite des Fahrzeugs 2 an der Hebeeinheit 4 eine entsprechende zweiteilige Fixierung F2 und auch auf der Seite der Last bzw. des Fahrradträgers 3 eine Fixierung F2 mit den beiden, baulich identischen Elementen 7, 8 vorhanden.

In vorteilhafter Weise ist eine Verstelleinheit zur Verstellung eines Abstands A zwischen den beiden Fixierungen F1 und F2 vorhanden. Der Abstand A zwischen den beiden Fixierungen F1 und F2 ist sowohl auf der Lastseite als auch auf der Fahrzeugseite gleich groß (zu wählen), so dass in vorteilhafter Weise Nachrüstungen mit Hilfe der vorteilhaften Hebeeinheit 4 auch für unterschiedlichste bzw. verschiedene gängige Befestigungsarten und/oder Befestigungssysteme von Lastträger- bzw. Fahrradträgersystemen verwendbar sind. So kann beispielsweise eine verstellbare Anordnung von Haltern 9, 10 der Hebeeinheit 4 vorgesehen werden. Hierdurch kann beispielsweise der Abstand A der beiden Fixierungen F1 und F2 auf der dem Fahrzeug 2 zugewandten Seite der Hebeeinheit 4 veränderbar ausgebildet werden.

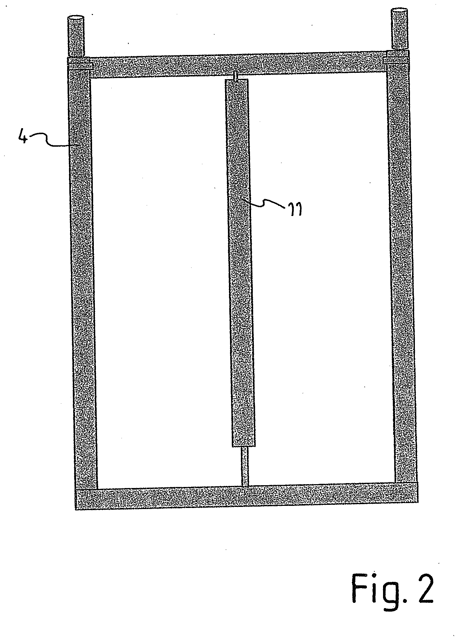

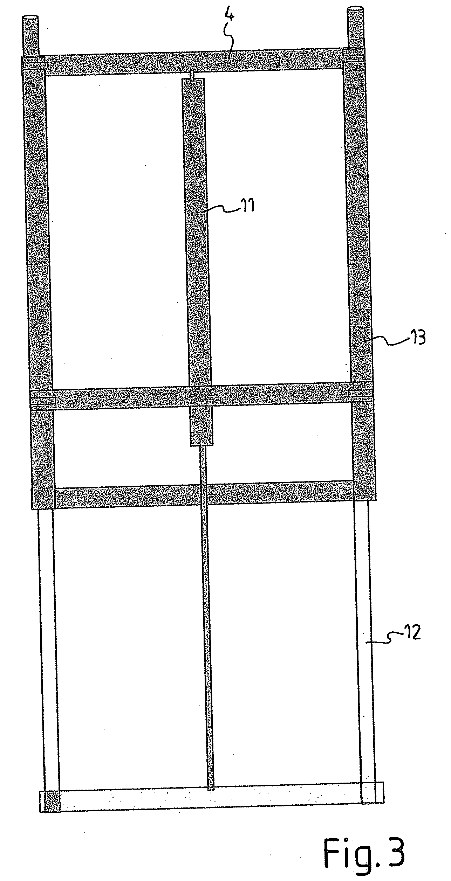

Mit einem Vergleich der Figuren 2 und 3 wird deutlich, dass die Hebeeinheit 4 bzw. der Lift 4 einen Hubzylinder 11 umfasst, der gemäß Figur 2 in einer eingefahrenen Position und gemäß Figur 3 in einer abgesenkten Position bzw. ausgefahrenen Position des Hubzylinders 11 verstellt werden kann. Der Hubzylinder 11 verstellt hierbei einen teleskopartigen Innenrahmen 12, der teleskopartig an einem Außenrahmen 13 der Hebeeinheit 4 geführt und verstellbar ist. Hiermit können in vorteilhafter Weise eine lineare bzw. nahezu vertikale, geradlinige Verstellung des Fahrradträgers 3 an einer Heckwand des Fahrzeugs 2 realisiert werden. Hierdurch ist eine besonders platzsparende Absenkung bzw. Anhebung für die Montage entsprechender Fahrräder bzw. Lasten an der Lasthalterung bzw. dem Fahrradträger 3 realisierbar.

Gemäß der Erfindung kann beispielsweise ein bereits vorhandener Fahrradträger an einem Wohnmobil bzw. Fahrzeug 2 demontiert werden und an dessen Stelle die Hebeeinheit 4 bzw. der Lift 4 an die am Fahrzeug 2 vorhandenen Halterungen bzw. Fixierungen F1 und F2 montiert werden. Danach kann beispielsweise der vorhandene Fahrradträger 3 an die Hebeeinheit 4 bzw. Lift 4 wiederum mittels der beiden Fixierungen F1 und F2 auf der Lastseite montiert werden.

Dementsprechend kann nahezu jedes Reisemobil, Caravan bzw.

Wohnmobil oder dergleichen entsprechend nachgerüstet werden, wobei die bereits vorhandenen Fahrradträger oder dergleichen in vorteilhafter Weise weiterverwendet werden können. So ergibt sich für die Benutzer des Lastträgers gemäß der Erfindung eine besonders kostengünstige Möglichkeit der Nachrüstung.

Beispielsweise kann ein Hubkolbenzylinder 11 oder auch ein elektrischer Antriebsmotor oder dergleichen zum Absenken und/oder Anheben der Lasthalterung bzw. des Fahrradträgers 3 verwendet werden. Hierbei kann eine sehr kurze Montagezeit für entsprechende Fahrräder in bequemer, abgesenkter Position der Hebeeinheit 4 realisiert werden. Anschließend wird mittels elektrischer Energie oder dergleichen das Anheben der Lasthalterung bzw. des Fahrradträgers 3 realisiert. Entsprechend ist auf Seiten des Fahrzeugs lediglich eine elektrische Zuleitung notwendig, z.B. mit Hilfe bereits vorhandener Steckdosensysteme, insbesondere 12 Volt Systeme.

So sind u.a. die großen Vorteile der vorliegenden Erfindung die schnelle Montage und die Rücken schonende Belademöglichkeit, die auch für kleinere Personen gut zu realisieren ist. Ebenso wird mit Hilfe der Erfindung keine Verminderung des Böschungswinkelns bei Reisemobilen oder dergleichen ermöglicht.

### Bezugszeichenliste

- 1: Lastträger
- 2: Fahrzeug
- 3: Fahrradträger
- 4: Hebeeinheit
- 5: Befestigungselement
- 6: Befestigungselement
- 7: Befestigungselement
- 8: Befestigungselement
- 9: Halter
- 10: Halter
- 11: Hubkolben
- 12: Rahmen
- 13: Rahmen

- F1: Fixierung
- F2: Fixierung
- A: Abstand

## Patentansprüche

1. Lastträger für ein Fahrzeug (2) wie einen PKW, ein Wohnmobil, einen Wohnwagen oder dergleichen, wobei wenigstens eine Lasthalterung (3) zum lösbaren Fixieren wenigstens einer Last wie ein Fahrrad, E-Bike, Pedelec, Motorroller, Skikoffer etc. vorgesehen ist, wobei wenigstens eine Hebeeinheit (4) zum Anheben und Absenken der Lasthalterung (3) und fahrzeugseitige Befestigungsmittel (5, 7) zur Befestigung der Hebeeinheit (4) am Fahrzeug (2) vorgesehen sind, wobei die Hebeeinheit (4) auf der der Fahrzeugseite gegenüberliegenden Lastseite Befestigungsmittel (5, 7) zum lösbaren Befestigen der Lasthalterung (3) umfasst, wobei die Lasthalterung (3) Befestigungsmittel (6, 8) zur lösbaren Befestigung an der Hebeeinheit (4) aufweist, **dadurch gekennzeichnet, dass** die lastseitigen Befestigungsmittel (5, 7) der Hebeeinheit (4) wenigstens ein erstes Last-Befestigungselement (5) und von dem ersten Last-Befestigungselement (5) in einem ersten Abstand (A) angeordnetes, zweites Last-Befestigungselement (7) aufweisen, wobei das erste Last-Befestigungselement (5) mit einem ersten Befestigungselement (6) der Lasthalterung (3) und das zweite Last-Befestigungselement (7) mit einem zweiten Befestigungselement (8) der Lasthalterung (3) in Wirkverbindung bringbar sind.

2. Lastträger nach Anspruch 1, **dadurch gekennzeichnet, dass** die Befestigungsmittel (6, 8) der Lasthalterung (3) gleich ausgebildet sind wie die fahrzeugseitigen Befestigungsmittel (6, 8) der Hebeeinheit (4).

3. Lastträger nach einem der vorgenannten Ansprüche, **dadurch gekennzeichnet, dass** die fahrzeugseitigen Befestigungsmittel (6, 8) der Hebeeinheit (4) wenigstens ein erstes Fahrzeug-Befestigungselement (6) und von dem ersten Fahrzeug-Befestigungselement (6) in einem zweiten Abstand (A) angeordnetes, zweites Fahrzeug-Befestigungselement (8) aufweisen, wobei das erste Fahrzeug-Befestigungselement (6) mit einem ersten Befestigungselement (5) einer Befestigungseinheit des Fahrzeugs (2) und das zweite Fahrzeug-Befestigungselement (8) mit einem zweiten Befestigungselement (7) der Befestigungseinheit des Fahrzeugs (2) in Wirkverbindung bringbar sind.

4. Lastträger nach einem der vorgenannten Ansprüche, **dadurch gekennzeichnet, dass** der erste Abstand (A) der Hebeeinheit (4) und der zweite Abstand (A) der Hebeeinheit (4) gleich groß sind.

5. Lastträger nach einem der vorgenannten Ansprüche, **dadurch gekennzeichnet, dass** die Hebeeinheit (4) als Linear-Hebeeinheit (4) mit einem Linearantrieb (11) zum geradlinigen Anheben und Absenken der Lasthalterung (3) ausgebildet ist.

6. Lastträger nach einem der vorgenannten Ansprüche, **dadurch gekennzeichnet, dass** die Linear-Hebeeinheit (11) wenigstens eine Hubkolben-Zylinder-Einheit (11) umfasst.

7. Fahrzeug, wie PKW, Wohnmobil, Wohnwagen, Bus oder dergleichen, mit einer Befestigungseinheit zum Befestigen einer Last, **dadurch gekennzeichnet, dass** ein Lastträger (1) nach einem der vorgenannt Ansprüche vorgesehen ist.

## Claims

1. Load carrier for a vehicle (2) such as a passenger car, a mobile home, a caravan or the suchlike, wherein at least one load mount (3) is provided for detachably fixing at least one load such as a bicycle, electric bicycle, pedelec, scooter, ski case etc., wherein at least one lifting unit (4) for lifting and lowering the load mount (3) and vehicle-side fastening means (5,7) for fastening the lifting unit (4) to the vehicle (2) are provided, wherein the lifting unit (4) on the load side opposite the vehicle side comprises fastening means (5,7) for detachably fastening the load mount (3), wherein the load mount (3) has fastening means (6,8) for detachably fastening to the lifting unit (4), **characterised in that** the load-side fastening means (5, 7) of the lifting unit (4) have at least one first load-fastening element (5) and a second load-fastening element (7) arranged in a first distance (A) from the first load-fastening element (5), wherein the first load-fastening element (5) comprising a first fastening element (6) of the load mount (3) and the second load-fastening element (7) comprising a second fastening element (8) of the load mount (3) can be operatively connected.

2. Load carrier according to claim 1, **characterised in that** the fastening means (6, 8) of the load mount (3) are designed the same and are like the vehicle-side fastening means (6, 8) of the lifting unit (4).

3. Load carrier according to one of the preceding claims, **characterised in that** the vehicle-side fastening means (6, 8) of the lifting unit (4) have at least a first vehicle fastening element (6) and a second vehicle fastening means (8) arranged in a second distance (A) from the first vehicle fastening means (6), wherein the first vehicle fastening means (6) comprising a first fastening element (5) of a fastening unit of the vehicle (2) and the second vehicle fastening element (8) comprising a second fastening element (7) of the fastening unit of the vehicle (2) can be operatively connected.

4. Load carrier according to one of the preceding claims, **characterised in that** the first distance (A) of the lifting unit (4) and the second distance (A) of the lifting unit (4) are the same in size.

5. Load carrier according to one of the preceding claims, **characterised in that** the lifting unit (4) is designed as a linear lifting unit (4) comprising a linear drive (11) for lifting and lowering the load mount (3) in a linear manner.

6. Load carrier according to one of the preceding claims, **characterised in that** the linear lifting unit (11) comprises at least one reciprocating piston cylinder unit (11).

7. Vehicle, such as a passenger car, mobile home, caravan, bus or the suchlike, comprising a fastening unit for fastening a load, **characterised in that** a load carrier (1) is provided according to one of the preceding claims.

## Revendications

1. Porte-charge pour un véhicule (2), tel qu'un véhicule de tourisme, une autocaravane, une caravane ou analogues, dans lequel au moins un support de charge (3) est prévu pour la fixation amovible d'au moins une charge telle qu'une bicyclette, un vélo à assistance électrique, un pédélec, un scooter, un porte-skis, etc., au moins une unité de levage (4) pour lever et abaisser le support de charge (3) et des moyens de fixation (5,7) côté véhicule pour lafixation de l'unité de levage (4) au véhicule (2) étant prévus, l'unité de levage (4) comprenant sur le côté charge opposé au côté véhicule des moyens de fixation (5,7) pourla fixation amovible du support de charge (3), le support de charge (3) présentant des moyens de fixation (6,8) pour la fixation amovible à l'unité de levage (4), **caractérisé en ce que** les moyens de fixation (5, 7) côté charge de l'unité de levage (4) présentent au moins un premier élément de fixation de charge (5) et un deuxième élément de fixation de charge (7) disposé à une première distance (A) du premier élément de fixation de charge (5), le premier élément de fixation de charge (5) pouvant être relié par une liaison mécanique à un premier élément de fixation (6) du support de charge (3) et le deuxième élément de fixation de charge (7) pouvant être relié par une liaison mécanique à un deuxième élément de fixation (8) du support de charge (3).

2. Porte-charge selon la revendication 1, **caractérisé en ce que** les moyens de fixation (6, 8) du support de charge (3) sont conçus identiques aux moyens de fixation (6, 8) côté véhicule de l'unité de levage (4).

3. Porte-charge selon l'une des revendications précédentes, **caractérisé en ce que** les moyens de fixation (6, 8) côté véhicule de l'unité de levage (4) présentent au moins un premier élément de fixation au véhicule (6) et un deuxième élément de fixation au véhicule (8), disposé à une deuxième distance (A) du premier élément de fixation au véhicule (6), le premier élément de fixation au véhicule (6) pouvant être relié par une liaison mécanique à un premier élément de fixation (5) d'une unité de fixation du véhicule (2) et le deuxième élément de fixation au véhicule (8) pouvant être relié par une liaison mécanique à un deuxième élément de fixation (7) de l'unité de fixation du véhicule (2).

4. Porte-charge selon l'une des revendications précédentes, **caractérisé en ce que** la première distance (A) de l'unité de levage (4) et la deuxième distance (A) de l'unité de levage (4) sont égales.

5. Porte-charge selon l'une des revendications précédentes, **caractérisé en ce que** l'unité de levage (4) est conçue comme une unité de levage linéaire (4) comportant un entraînement linéaire (11) pour le levage et l'abaissement rectilignes du support de charge (3).

6. Porte-charge selon l'une des revendications précédentes, **caractérisé en ce que** l'unité de levage linéaire (11) comprend au moins une unité de cylindre de piston alternatif (11).

7. Véhicule, tel qu'un véhicule de tourisme, une autocaravane, une caravane, un autocar ou analogues, comportant une unité de fixation pour la fixation d'une charge, **caractérisé en ce qu'**est prévu un porte-charge (1) selon l'une des revendications précédentes.
